# EUROPÄISCHE PATENTSCHRIFT

(11) **EP 0 748 891 B1**
(45) Veröffentlichungstag und Bekanntmachung des Hinweises auf die Patenterteilung: **08.09.1999**
(21) Anmeldenummer: 96103813.0
(22) Anmeldetag: 11.03.1996
(51) Int. Cl.: D06F 39/00, A47L 15/46, G01N 21/53

(54) **Verfahren zur Temperaturkompensation der Messwerte eines Trübungssensors in einer automatischen Wasch- oder Geschirrspülmaschine**
Method of temperature compensation of measured values of a turbidity sensor in an automatic clothes-washer or a dishwasher
Procédé de compensation en température des mesures d'un capteur de turbidité dans un lave-linge ou un lave-vaisselle automatique

(30) Priorität: 12.06.1995 DE 19521326
(43) Veröffentlichungstag der Anmeldung: 18.12.1996
(73) Patentinhaber: BSH Bosch und Siemens Hausgeräte GmbH, 81669 München (DE)
(72) Erfinder: Engel, Christian, Dipl.-Ing., 13403 Berlin (DE)

(56) Entgegenhaltungen:
- WO-A-96/21390
- DE-A- 4 139 899
- US-A- 4 257 708
- US-A- 4 492 868
- US-A- 4 841 157
- US-A- 5 291 626
- US-A- 5 477 576

## Beschreibung

Die Erfindung betrifft ein Verfahren zur Temperaturkompensation der Meßwerte eines Trübungssensors, der an einem von der Waschlauge erreichbaren Ort eines wasserführenden Haushaltgerätes, vorzugsweise einer automatischen Wasch- oder Geschirrspülmaschine mit einer Prozeßsteuerung unter Verwendung eines Mikroprozessors eingebaut ist und einen Lichtsender und einen Lichtempfänger für die Durchleuchtung der innerhalb der Meßstrecke befindlichen Waschlauge enthält.

Durch den Einsatz eines Trübungssensors in der Waschmaschine kann die Trübung der Waschlauge als Prozeßparameter erfaßt werden und zur Optimierung des Spülprozesses herangezogen werden. Da der Trübungssensor sich in der Nähe der Waschlauge befindet, besteht eine thermische Kopplung zwischen Trübungssensor und Waschlauge. Die Temperatur der Waschlauge kann zwischen etwa 10° und 95° im Normalbetrieb schwanken, so daß der Trübungssensor ebenfalls starken Temperaturschwankungen ausgesetzt ist.

Der Trübungssensor arbeitet nach einem optischen Verfahren und besteht aus einem Sender (z.B. einer LED), der Licht im nahen Infrarotbereich aussendet, und einem optischen Empfänger (Fototransistor bzw. Fotodiode oder Fotowiderstand), der das optische Infrarotsignal in ein proportionales elektrisches Signal umformt. Der Sender (z.B. Infrarot-LED) und der verwendete Empfänger (z.B. Fototransistor) sind in ihren elektrooptischen Eigenschaften jedoch stark temperaturabhängig. Ohne eine entsprechende Temperaturkompensation würden Temperaturschwankungen als Schwankungen des Trübungswertes interpretiert werden und zu falschen Ergebnissen bei der Auswertung des Signals führen. Deshalb ist eine Temperaturkompensation des Trübungssensors in allen Geräten erforderlich, in denen der Trübungssensor größeren Temperaturschwankungen ausgesetzt ist, also beispielsweise in Wasch- oder Spülmaschinen.

Aus der Europäischen Patentanmeldung EP 0 393 311 A1 ist eine Waschmaschine mit einer Einrichtung zur Messung des Verunreinigungs-Zustands der Waschlauge bekannt. Diese Einrichtung benutzt ebenfalls einen elektrooptischen Trübungssensor, der zu Beginn eines mehrere Trübungs-Messungen enthaltenden Prozesses kalibriert werden soll. Diese Kalibrierung bezieht sich auf einen Bezugswert der Trübung, die einer Meßwert-Definition von Null entsprechen soll. Dazu wird vor Beginn der Messungen der Trübungssensor mit reinem Leitungswasser oder mit Luft beaufschlagt und der hierbei ermittelte Messungwert zu Null definiert. Die bekannte Einrichtung berücksichtigt aber nicht, daß die Umgebungstemperatur des Trübungssensors stark schwanken kann und einen erheblichen Einfluß auf die Große des Trübungsmeßwertes hat.

Wird für die Trübungsmessung eine Kombination aus Fototransistor und IR-LED benutzt, dann überlagern sich die Temperaturkoeffizienten beider Bauteile und man erhält für den Trübungssensor einen Gesamtkoeffizienten. Dies gilt auch bei Verwendung ähnlicher Bauteile.

Dieser Gesamt Gesamt-Temperaturkoeffizient setzt sich aus vielen Einflußgrößen zusammen, die hier exemplarisch für die Kombination IR-LED und Fototransistor aufgeführt sind:
- Die Strahlung des Senders verschiebt sich mit steigender Temperatur zu größeren Wellenlängen hin. Damit verändert sich der Koppelfaktor zwischen Sender und Empfänger.
- Die Strahlungsleistung des Senders sinkt mit steigender Temperatur. Dadurch sinkt der Meßstrom im Fototransistor um den Faktor, um den die Lichtintensität abnimmt.
- Bei der Erwärmung der IR-LED sinkt die Durchlaßspannung um ca. 2mV/K wodurch sich bei gleichbleibendem Durchlaßstrom die elektrische Leistung verringert. Die Lichtintensität fällt dadurch weiter ab.
- Bei hoher Temperatur altert die IR-LED schneller, was eine abfallende Lichtintensität zur Folge hat.
- Die spektrale Empfindlichkeit des Fototransistors verändert sich mit der Temperatur, was eine Veränderung des Koppelfaktors zwischen Fototransistor und IR-LED zur Folge hat.
- Der Stromverstärkungsfaktor des Fototransistors steigt mit zunehmender Temperatur. Dadurch steigt der Meßstrom im Fototransistor bei gleichbleibender Lichtintensität an.
- Der Dunkelstrom des Fototransistors steigt mit zunehmender Temperatur an, was zu einer allgemeinen Erhöhung des Meßstromes führt, unabhängig von der Lichtintensität.
- Der Fototransistor altert bei hoher Temperatur schneller, was zu einer Veränderung der elektrooptischen Parameter führt.
- Der Brechungsindex des Wassers in der Meßstrecke verändert sich mit der Temperatur. Dadurch ändern sich die fotooptischen Parameter des Strahlengangs zwischen Sender und Empfänger, was wiederum den Kopplungsfaktor beeinflußt.

Aus der Vielzahl der Parameter, die von der Temperatur abhängig sind und Einfluß auf den Meßstrom haben, ist ersichtlich, daß man nicht jede Einflußgröße einzeln kompensieren kann. Der Trübungssensor muß daher als Gesamtsystem betrachtet werden, dessen Parameter durch Versuche zu bestimmen sind. Insbesondere gilt dies für die Temperaturkoeffizienten der elektronischen Bauteile des Trübungssensors, da sich diese sehr stark im Meßergebnis niederschlagen.

Als besonders störend hat sich bei Versuchen herausgestellt, daß der ermittelte Temperaturkoeffizient außerdem abhängig von dem jeweiligen Arbeitspunkt ist. Dies gilt für den Empfänger (z.B. Fototransistor) als auch für den Sender (z.B. IR-LED). Beim Fototransistor ist der Temperaturkoeffizient abhängig von der Kollektor-Emitter-Spannung und bei der IR-LED vom Durchlaßstrom. Bei einem konstanten Durchlaßstrom der IR-LED verändert sich zwar der Temperaturkoeffizient der IR-LED nicht, aber in Abhängigkeit von der Trübung verändert sich die Kollektor-Emitter-Spannung des Fototransistors und damit dessen Temperaturkoeffizient. Deshalb kann man bei der Temperaturkompensation nicht mit einem konstanten Kompensationsfaktor rechnen, sondern muß den Kompensationsfaktor dynamisch anpassen.

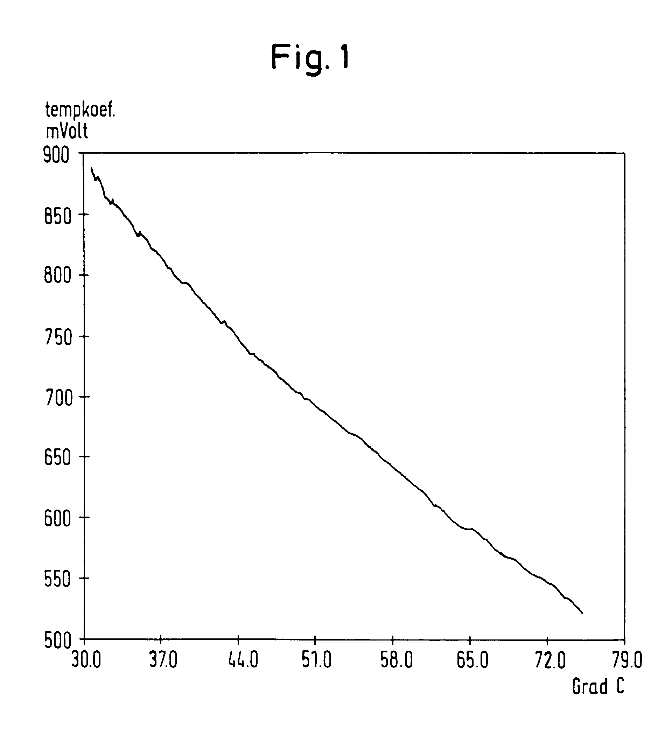

Fig. 1 zeigt den Temperaturkoeffizienten eines Trübungssensors über dem für Waschlaugen interessanten Temperaturbereich bei der Anwendung des sogenannten Durchlichtverfahrens. Als Sender wurde die IR-LED SFH484 benutzt und als Empfänger der Fototransistor SFH309F. Der Sendestrom der LED betrug bei der Messung 5 mA und es wurde eine künstliche Trübung durch einen Kunststoffstreifen erzeugt. Der Sensor befand sich während der Messung in einem Klimaschrank. Gemessen wurde während der Abkühlphase. Aus der Messung ergibt sich ein Temperaturkoeffizient von -6,6 mV/K oder -0,95% pro Kelvin.

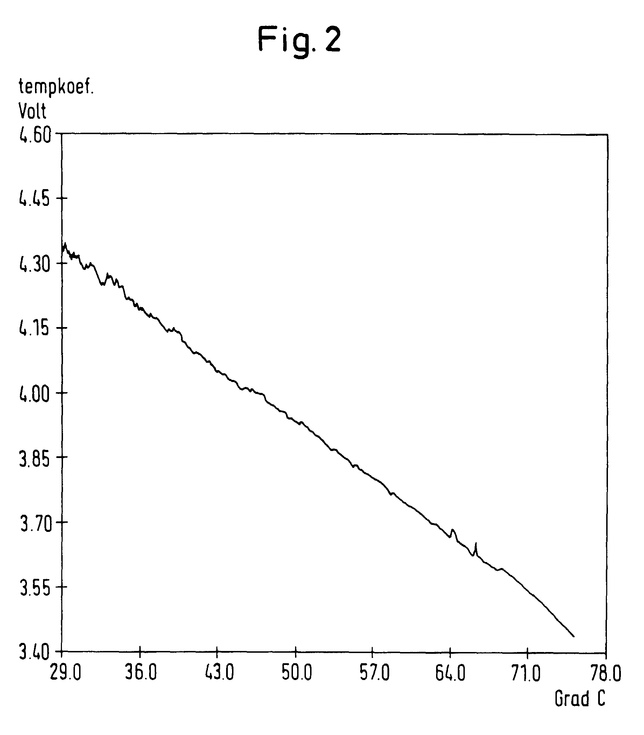

Fig. 2 zeigt die gleiche Messung ohne Trübung der Meßstrecke. Die Versuchsbedingungen sind ansonsten die gleichen wie bei der vorherigen Messung. Der bei dieser Messung ermittelte Temperaturkoeffizient beträgt -20,4 mV/K bzw. -0,52% pro Kelvin. Damit ist der Temperaturkoeffizient bei der zweiten Messung nur etwa halb so groß wie bei der Messung mit simulierter Trübung. Der Sendestrom der IR-LEDs war bei beiden Messungen identisch nicht jedoch der Arbeitspunkt, da durch die simulierte Trübung ein geringerer Kollektorstrom im Fototransistor erzeugt wird als ohne Trübung. Durch den geringeren Kollektorstrom steigt aber die Kollektor-Emitter-Spannung an, da an dem Meßwiderstand eine geringere Spannung abfällt .

Gleiches gilt für die IR-LED, bei welcher das ausgesendete Infrarotlicht mit steigender Temperatur schwächer wird. Bei IR-LEDs liegt der Temperaturkoeffizient in der Regel zwischen -0,7% und -0,5% pro Kelvin, je nach verwendetem Halbleitermaterial.

Die Temperaturkoeffizienten von Fototransistor und IR-LED wirken zwar gegeneinander, heben sich aber gegenseitig nicht auf. Der sich ergebende Gesamtkoeffizient muß also in jedem Fall kompensiert werden.

Der Temperaturbereich, dem der Trübungssensor im Worst Case ausgesetzt wird, beträgt ca. 85° Kelvin, nämlich von etwa 10° bis etwa 95° Celsius. Unter der Annahme, der Temperaturkoeffizient würde 0,95%/K betragen, ergibt sich damit eine Drift des Ausgangssignals von 80,75%, ohne daß sich an der Trübung etwas ändert. Für den Versuch ohne Trübung mit einem Temperaturkoeffizienten von 0,52%/K ergibt sich unter diesen Randbedingungen immer noch eine Drift von 44,2%. Eine statische Temperaturkompensation ist zwar auch möglich, gilt dann aber nur für einen bestimmten Arbeitspunkt, wodurch der Sensor in seinem Arbeitsbereich sehr eingeschränkt wird.

Ohne eine entsprechende Kompensation würden derartige temperaturbedingte Signaldriften die Trübungsmessung so stark verfälschen, daß eine aussagekräftige Messung der Trübung nicht mehr möglich ist.

Der Erfindung liegt daher die Aufgabe zugrunde, bei einem eingangs beschriebenen Verfahren für alle Temperaturen im relevanten Bereich und für alle Trübungsvarianten korrekte Trübungsmeßwerte zu erhalten. Eine Temperaturkompensation des Sensors ist zwar unbedingt erforderlich. Wie aus den Beispielen ersichtlich ist, kann aber kein allgemeingültiger Temperaturkoeffizient angegeben werden.

Erfindungsgemäß wird diese Aufgabe dadurch gelöst, daß der Temperaturkoeffizient des Trübungssensors für jeden Arbeitspunkt errechnet und in der Software für die Auswertung der Meßergebnisse des Trübungssensors als Korrekturwert abgelegt wird und in Abhängigkeit von der am Trübungssensor anliegenden und gemessenen Temperatur zur Korrektur des jeweiligen Meßergebnisses herangezogen wird.

Durch die Drift des Arbeitspunktes in Abhängigkeit von der Trübung verändert sich nämlich auch der Temperaturkoeffizient. Daher ist eine Temperaturkompensation nur möglich, indem die Kompensation gemäß der Erfindung dynamisch dem jeweiligen Arbeitspunkt angepaßt wird.

In einer vorteilhaften Weiterbildung des erfindungsgemäßen Verfahrens wird zunächst ein Meßergebnis am Trübungssensor registriert und daraus der Arbeitspunkt des Trübungssensors ermittelt. Weiterhin wird nach der unmittelbar anschließenden oder gleichzeitigen Messung der Umgebungstemperatur des Trübungssensors unter Berücksichtigung des Meßwertes der Umgebungstemperatur und des Arbeitspunktes der Korrekturwert berechnet und zum Meßergebnis addiert.

Die Kompensation würde dann nach folgendem Schema erfolgen:
1. Messen des Trübungssignals.
2. Ermittlung des Arbeitspunktes.
3. Messen der Temperatur am Trübungssensor.
4. Berechnung des Korrekturwertes für den ermittelten Arbeitspunkt und die gemessene Temperatur.
5. Addition des Korrekturwertes zum Meßwert, um den kompensierten Trübungsmeßwert zu erhalten.

Eine dynamische Temperaturkompensation läßt sich daher am besten und besonders kostengünstig durch eine softwaregesteuerte Auswertung des Trübungssignals erreichen. Für jeden möglichen Arbeitspunkt des Sensors wird der Temperaturkoeffizient ermittelt und in die Auswertesoftware integriert. Hardwaremäßig wird der Sensor durch einen Temperaturfühler ergänzt, um in jedem Arbeitspunkt des Sensors die zugehörige Temperatur zu ermitteln zu können.

In einer weiteren vorteilhaften Ausführungsform des erfindungsgemäßen Verfahrens wird zunächst die Umgebungstemperatur des Trübungssensors gemessen und daraus der Arbeitspunkt des Trübungssensors ermittelt. Weiterhin wird aus der Abweichung des ermittelten Arbeitspunktes vom typischen Arbeitspunkt des Trübungssensors ein Ausgleichswert berechnet, um den die Eingangsgröße des Trübungssensors für die anschließende Trübungsmessung zu verändern ist.

Diese Verfahrens-Alternative kann also folgendermaßen ablaufen:
1. Messen der Temperatur am Trübungssensor.
2. Ermittlung des Arbeitspunktes.
3. Berechnung eines Ausgleichswertes, um den der Sendestrom des Senders (z.B. IR-LED) zu verändern ist, damit der Temperatureinfluß ausgeglichen werden kann.
4. Addition des Ausgleichswertes zum bisherigen Sendestrom und Einstellen des neuen Sendestromes.
5. Messung des korrigierten Trübungssignals.

Durch die Erfindung ist es möglich, die Trübung von Flüssigkeiten zu bestimmen, die während der Messung Temperaturschwankungen unterliegen. Die erhaltenen Meßwerte sind frei von Fehlern durch Temperatureinflüsse. Durch die Temperaturüberwachung können die Bauteile gleichzeitig vor Zerstörung durch zu hohe Betriebstemperaturen geschützt werden. Der Temperaturfühler kann außerdem zur Überwachung der Laugentemperatur benutzt werden. Daher ist an sich für die Temperaturkompensation des Trübungssignals kein besonderer Temperaturfühler erforderlich.

Anhand der in der Zeichnung dargestellten Diagramme und Ausführungsbeispiele ist die Erfindung nachstehend erläutert. Es zeigen
- Fig. 1: den Verlauf des Temperaturkoeffizienten eines Trübungssensors über dem für Waschlaugen interessanten Temperaturbereich bei der Anwendung des sogenannten Durchlichtverfahrens.
- Fig. 2: den Verlauf ohne Trübung der Meßstrecke und mit ansonsten gleichen Versuchsbedingungen gemäß Fig. 1,
- Fig.3: ein Schaltschema für einen Trübungssensor mit Temperaturkompensation gemäß der Erfindung,
- Fig.4: ein Ausführungsbeispiel für die räumliche Ausbildung eines Trübungssensors mit Temperatursensor zur Kompensation des Temperaturfehlers in einer Ansicht von oben und
- Fig. 5: ein Trübungssensor gemäß Fig. 4 in einer Seitenansicht.

Als Temperatursensor kann z.B. ein NTC-Widerstand, ein PTC-Widerstand oder ein Thermoelement verwendet werden. Als Lichtquelle kommen LED, Laser-Diode, Glühlampe, Glimmlampe, Leuchtstoffröhre oder ähnliche Lichtquellen in Frage. Geeignete Empfangselemente sind Fototransistor, Fotodiode, Fotowiderstand, Fotoelement, Fotozelle oder ein ähnliches Empfangselement.

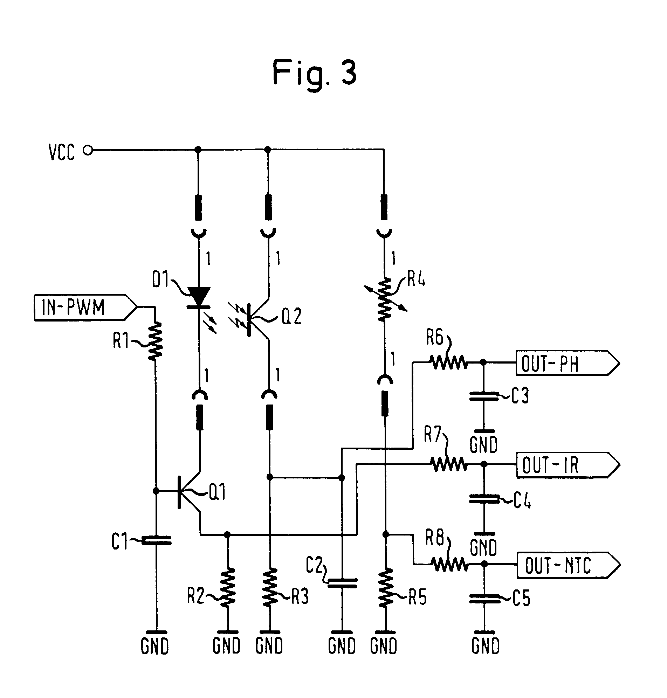

Fig. 3 zeigt die Schaltung für einen Trübungssensor mit Temperaturkompensation gemäß der Erfindung. Der Trübungssensor besteht im wesentlichen aus der IR-LED D1, dem Fototransistor Q2 und dem Temperaturfühler (NTC- oder PTC-Widerstand) R4. Dabei wird der Sender durch die Ansteuerung der IR-LED mittels eines pulsweitenmodulierten Signals (PWM-Signal) gebildet. das am Widerstand R1 anliegt. Der Widerstand R1 bildet mit dem Kondensator C1 einen Tiefpaß, dessen Eckfrequenz wesentlich größer sein muß als die Frequenz des PWM-Signals. Damit wird aus dem PWM-Signal eine analoge Spannung erzeugt, die proportional zum Tastverhältnis des PWM-Signals ist. Diese Spannung liegt an der Basis des Transistors Q1, womit ebenfalls die Spannung am Widerstand R2 festgelegt wird.

Der Transistor Q1 arbeitet hierbei als spannungsgesteuerte Stromquelle für die im Kollektorzweig liegende IR-LED. Der Strom durch die IR-LED ist gleich dem Kollektorstrom, welcher in etwa dem Emitterstrom entspricht (bei Vemachlässigung des dagegen sehr kleinen Basisstroms). Der Emitterstrom ist durch den Spannungsabfall an R2 festgelegt. Dieser Spannungsabfall wird über den Tiefpaß, bestehend aus R7 und C4, als Ausgangssignal OUT-IR herausgeführt und ist proportional zum Strom durch die IR-LED.

Auf der Empfängerseite ist der Fototransistor Q2 mit dem Widerstand R3 in Reihe geschaltet, um den Fotostrom des Transistors in eine proportionale Spannung umzuformen. die an R3 abfällt. Der Kondensator C2 glättet dann das Signal, bevor es über den Tiefpaß. bestehend aus R6 und C3. als Ausgangssignal OUT-PH zur Verfügung gestellt wird.

Die Temperaturkompensation bedarf der Temperaturmessung mittels eines Temperatursensors. Die Widerstände R4 und R5 bilden einen Spannungsteiler. Seine Teiler-Spannung ist temperaturabhängig, weil R4 ein NTC-Widerstand ist. Dieser Schaltungsteil dient der Temperaturmessung des Trübungssensors, die durch eine Auswertung zum Signal OUT-NTC wird, das über den Tiefpaß aus R8 und C5 herausgeführt wird.

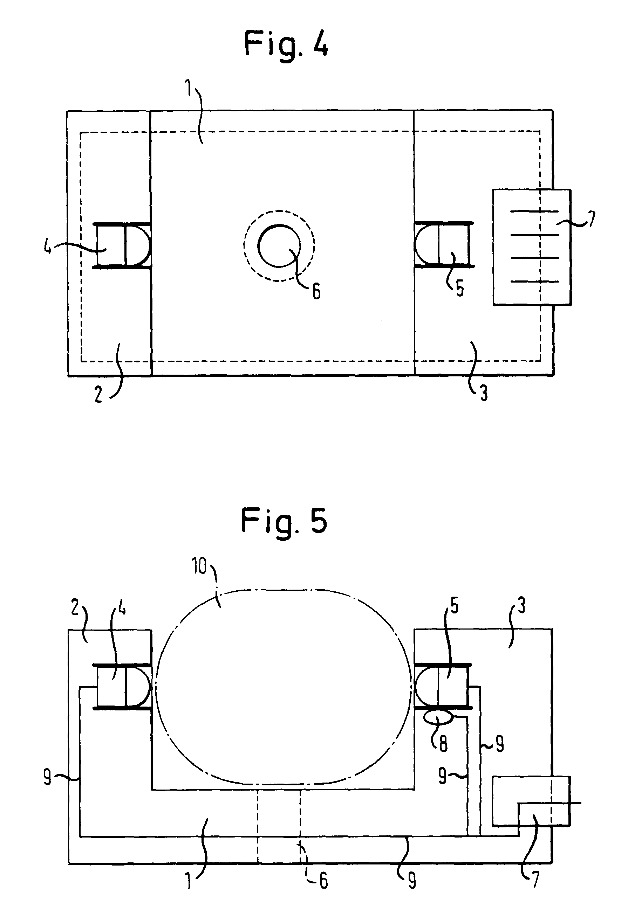

Wichtig bei der Befestigung des Temperaturfühlers ist ein guter thermischer Kontakt zwischen einem der Sensorbauelemente und dem Temperaturfühler. Fig. 4 und 5 zeigen eine mögliche Version des Trübungssensors mit Temperaturkompensation. Darin dient eine Leiterplatte 1 als Brücke für zwei Träger 2 und 3, von denen der eine Träger 2 einen Fototransistor 4 trägt und der andere Träger 3 eine Infrarot-Leuchtdiode 5 (IR-LED). Diese Vorrichtung kann mittels eines Loches 6 auf einer Unterlage, z.B. einer Traverse (nicht dargestellt) für die Halterung eines transparenten Abschnitts 10 einer Flüssigkeitsleitung, befestigt sein. Die Leiterplatte 1 trägt außerdem noch eine Steckanschluß-Wanne 7 für die äußere elektrische Verbindung der Vorrichtung. Im Träger 3 ist ferner ein NTC-Widerstand 8 als Temperaturfühler in thermischer Kopplung zur Leuchtdiode 5 angebracht, der ebenfalls mit eigenen Leitungen 9 (schematisch angedeutet) der Leiterplatte 1 elektrisch verbunden ist.

## Patentansprüche

1. Verfahren zur Temperaturkompensation der Meßwerte eines Trübungssensors, der an einem von der Waschlauge erreichbaren Ort einer automatischen Waschmaschine mit einer Prozeßsteuerung unter Verwendung eines Mikroprozessors eingebaut ist und einen Lichtsender und einen Lichtempfänger für die Durchleuchtung der innerhalb der Meßstrecke befindlichen Waschlauge enthält, **dadurch gekennzeichnet,** daß der Temperaturkoeffizient des Trübungssensors (D1, Q2 bzw. 4, 5) für jeden Arbeitspunkt errechnet und in der Software für die Auswertung der Meßergebnisse des Trübungssensors als Korrekturwert abgelegt wird und in Abhängigkeit von der am Trübungssensor anliegenden und gemessenen Temperatur zur Korrektur des jeweiligen Meßergebnisses herangezogen wird.

2. Verfahren nach Anspruch 1, **dadurch gekennzeichnet,** daß zunächst ein Meßergebnis am Trübungssensor registriert und daraus der Arbeitspunkt des Trübungssensors ermittelt wird und daß nach der unmittelbar anschließenden oder gleichzeitigen Messung der Umgebungstemperatur des Trübungssensors unter Berücksichtigung des Meßwertes der Umgebungstemperatur und des Arbeitspunktes der Korrekturwert berechnet und zum Meßergebnis addiert wird.

3. Verfahren nach Anspruch 1, **dadurch gekennzeichnet,** daß zunächst die Umgebungstemperatur des Trübungssensors gemessen und daraus der Arbeitspunkt des Trübungssensors ermittelt wird und daß aus der Abweichung des ermittelten Arbeitspunktes vom typischen Arbeitspunkt des Trübungssensors ein Ausgleichswert berechnet wird, um den die Eingangsgröße des Trübungssensors für die anschließende Trübungsmessung zu verändern ist.

## Claims

1. Method for the temperature compensation of the measurement values of a turbidity sensor, which is installed at a location, which can be reached by the suds, of an automatic washing machine with a process control subject to the use of a microprocessor and which contains a light transmitter and a light receiver for the transillumination of the suds situated within the measurement path, characterised in that the temperature co-efficient of the turbidity sensor (D1, Q2 or 4, 5) is computed for each operating point and filed as correction value in the software for the evaluation of the measurement results of the turbidity sensor and drawn upon for the correction of the respective measurement results in dependence on the temperature present and measured at the turbidity sensor.

2. Method according to claim 1, characterised in that a measurement result at the turbidity sensor is recorded initially and the operating point of the turbidity sensor is ascertained therefrom and that the correction value is computed and added to the measurement result after the directly following or simultaneous measurement of the ambient temperature of the turbidity sensor subject to consideration of the measurement value of the ambient temperature and of the operating point.

3. Method according to claim 1, characterised in that the ambient temperature of the turbidity sensor is measured initially and the operating point of the turbidity sensor is ascertained therefrom and that a compensation value is computed from the deviation of the ascertained operating point from the typical working point of the turbidity sensor, by which compensation value the input magnitude of the turbidity sensor is to be varied for the following turbidity measurement.

## Revendications

1. Procédé de compensation en température des mesures d'un capteur de turbidité, qui est monté à un endroit accessible au liquide de lavage d'un lave-linge automatique avec une commande de processus en utilisant un microprocesseur et comprend un émetteur de lumière et un récepteur de lumière pour l'éclairage par transparence du liquide de lavage se trouvant à l'intérieur de la section de mesure, caractérisé en ce que le coefficient de température du capteur de turbidité (D1, Q2 resp. 4, 5) est calculé pour chaque point de fonctionnement et est classé comme valeur correctrice dans le logiciel pour l'analyse des résultats de mesure du capteur de turbidité et est extrait en fonction de la température située et mesurée au capteur de turbidité pour corriger le résultat de mesure respectif.

2. Procédé selon la revendication 1, caractérisé en ce qu'un résultat de mesure est d'abord enregistré au capteur de turbidité et, de ce fait, le point de fonctionnement du capteur de turbidité est déterminé et en ce que, après la mesure immédiatement consécutive ou simultanée de la température ambiante du capteur de turbidité, la valeur correctrice est calculée, en tenant compte de la valeur de mesure de la température ambiante et du point de fonctionnement, et est ajoutée au résultat de mesure.

3. Procédé selon la revendication 1, caractérisé en ce que la température ambiante du capteur de turbidité est d'abord mesurée et, de ce fait, le point de fonctionnement du capteur de turbidité est déterminé et en ce qu'une valeur de compensation est calculée à partir de la différence entre le point de fonctionnement déterminé et le point de fonctionnement typique du capteur de turbidité, valeur de compensation selon laquelle la grandeur d'entrée du capteur de turbidité pour la mesure de turbidité suivante est à modifier.
